# EUROPEAN PATENT APPLICATION

(11) **EP 3 892 547 A1**
(43) Date of publication of application: **13.10.2021**
(21) Application number: 18942639.8
(22) Date of filing: 03.12.2018
(51) Int. Cl.: B64D 45/00, F16F 15/04

(54) **CONTROL ASSEMBLY AND AIRCRAFT**

(71) Applicant: SZ DJI Technology Co., Ltd., Shenzhen, Guangdong 518057 (CN)
(72) Inventor: GAO, Shijing, Shenzhen, Guangdong 518057 (CN); DING, Peng, Shenzhen, Guangdong 518057 (CN); WANG, Chaorui, Shenzhen, Guangdong 518057 (CN)
(74) Representative: Appelt, Christian W.
(86) International application number: PCT/CN2018/118999
(87) International publication number: WO 2020/113388

(57) **Abstract**

A control assembly (100) and an aircraft (200) include a bearing board (11), a central board (12), a flight control board (13), a shock absorbing mechanism (14), and a communication connection cable (15). The flight control board (13) is mounted on the central board (12). The central board (12) is connected to the bearing board (11) via the shock absorbing mechanism (14). Therefore, the flight control board (13) and the central board (12) form a whole for shock absorption through the shock absorbing mechanism (14).

## Description

### TECHNICAL FIELD

Embodiments of this application relate to the technical field of aircraft devices, and in particular, to a control assembly and an aircraft.

### BACKGROUND

Currently, with the development of unmanned aerial vehicle technologies, unmanned aerial vehicles are more extensively applied in various fields. There are more types of unmanned aerial vehicles, for example, medium- or large-sized unmanned aerial vehicles. Central modules (including a main control module, a flight control module, a power module, and the like) of a medium- or large-sized unmanned aerial vehicle are all designed in a centralized manner and highly integrated. In addition, the central modules and the body of an unmanned aerial vehicle are directly hard connected. As a result, the shock absorption effect of the modules is poor. When the body of an unmanned aerial vehicle receives a large impact, its central modules can be easily damaged; in a severe case, the unmanned aerial vehicle may even be scrapped.

### SUMMARY

Based on the foregoing, the embodiments of this application provide a control assembly and an aircraft. The control assembly is installed in the aircraft and has an overall shock absorption effect, thereby reducing the damage to the aircraft when the aircraft is impacted.

In a first aspect, the present application provides a control assembly, including:
a bearing board;
a central board, including a circuit board and electronic parts and components that are disposed on the circuit board for a signal transfer function;
a flight control board, including a flight controller and a posture sensor that is configured to sense a posture of the aircraft, wherein the flight control board is stacked over the central board, and the flight controller controls a flight posture of the aircraft;
a shock absorbing mechanism, one end of which is connected to the bearing board and another end of which is connected to the central board, configured to provide shock absorption for the posture sensor; and
a communication connection cable, configured to electrically connect the flight control board to the central board,
wherein the central board and the flight control board are fixedly connected as a whole for shock absorption.

In a second aspect, the present application further provides an aircraft, including:
a body;
a control assembly, detachably mounted in the body, the control assembly includes:
   a bearing board;
   a central board, including a circuit board and electronic parts and components that are disposed on the circuit board for a signal transfer function;
   a flight control board, including a flight controller and a posture sensor that is configured to sense a posture of the aircraft, wherein the flight control board is stacked over the central board, and the flight controller can control a flight posture of the aircraft;
   a shock absorbing mechanism, one end of which is connected to the bearing board and another end of which is connected to the central board, configured to provide shock absorption for the posture sensor; and
   a communication connection cable, configured to electrically connect the flight control board to the central board,
   wherein the central board and the flight control board are fixedly connected as a whole for shock absorption.

Some exemplary embodiments of the present application provides a control assembly and an aircraft, wherein the control assembly includes: a bearing board, a central board, a flight control board, and a shock absorbing mechanism; wherein the flight control board is mounted on the central board, the central board is connected to the bearing board via the shock absorbing mechanism, such that the shock absorbing mechanism provides shock absorbing for the entire structure formed by the flight control board and the central board, which enhances the shock absorbing effect, and improves the flight safety of the aircraft.

It should be understood that the above general description and the following detailed description are only exemplary and explanatory, and do not limit the exemplary embodiments of the present application.

### BRIEF DESCRIPTION OF THE DRAWINGS

To describe the technical solutions in the exemplary embodiments of this application more clearly, the following briefly describes the accompanying drawings required for describing the exemplary embodiments. Apparently, the accompanying drawings in the following description show some embodiments of this application, and a person of ordinary skill in the art may still derive other drawings from these accompanying drawings without creative efforts.
FIG. 1 is a schematic exploded structural diagram of a control assembly according to an exemplary embodiment of this application;
FIG. 2 is a schematic structural diagram of a control assembly according to an exemplary embodiment of this application;
FIG. 3 is a schematic structural diagram of a shock absorbing mechanism according to an exemplary embodiment of this application;
FIG. 4 is a schematic structural diagram of a central board according to an exemplary embodiment of this application;
FIG. 5 is a schematic structural diagram of a radio frequency subcard according to an exemplary embodiment of this application;
FIG. 6 is a schematic structural diagram of a radio frequency subcard according to an exemplary embodiment of this application;
FIG. 7 is a schematic structural diagram of a radio frequency subcard according to an exemplary embodiment of this application;
FIG. 8 is a schematic structural diagram of a protective member according to an exemplary embodiment of this application;
FIG. 9 is a schematic structural diagram of a power board according to an exemplary embodiment of this application;
FIG. 10 is a schematic structural diagram of a power board from another perspective according to an exemplary embodiment of this application; and
FIG. 11 is a schematic structural diagram of an aircraft according to an exemplary embodiment of this application.

### Description of main components and reference signs:

100. control assembly; 101. mounting hole; 102. fixing post; 103. protective member; 1030. through hole; 1031. through hole; 11. bearing board; 110. power circuit board; 111. opening portion; 112. electrode terminal; 113. power cable; 12. central board; 120. heat dissipation device; 121. cooling rib; 1211. first cooling rib; 1212. second cooling rib; 1210. positioning post; 1200. protruding block; 123; supporting frame; 1231. first mounting hole; 1232. second mounting hole; 124. protective cover; 125. first heat dissipation structure; 126. second heat dissipation structure; 1201. circuit board; 13. flight control board; 14. shock absorbing mechanism; 141. main body portion; 142. blocking portion; 143. slot; 15. communication connection cable; 16. radio frequency subcard; 160. shielding cover; 1600. cooling rib slot. 161. radio frequency circuit board; 1610. positioning hole; 1611. first disposition area; 1612. second disposition area; 164. first shielding cover; 1641. fixing base; 1642. housing cover; 165. second shielding cover; 1630. vent hole; 166. third shielding cover; 17.

connecting member; 200. aircraft; 201. body; 21. first supporting board; 22. second supporting board; 220. through hole portion; 221. first limiting structure; 2211. limiting hole; 222. second limiting structure; 2221. limiting post; 223. third limiting structure; and 2231. engaging member.

### DETAILED DESCRIPTION

The following clearly and completely describes the technical solutions in the exemplary embodiments of this application with reference to the accompanying drawings of the exemplary embodiments of this application. Apparently, the described embodiments are some but not all of the embodiments of this application. All other embodiments obtained by a person of ordinary skill in the art based on the embodiments described in this application without creative efforts shall fall within the scope of protection of the embodiments of this application.

It should also be understood that, the terms used in the specification of the exemplary embodiments of this application are only to describe certain specific embodiments, and not intended to limit the embodiments of this application. As used in the specification of the exemplary embodiments of this application and the appended claims, "a/an", "one", and "the" in singular forms are intended to cover plural forms, unless otherwise clearly indicated in a context.

It should also be understood that, when a component is described as "fixed to" another component, the component may be directly located on another component, or an intermediate component may exist therebetween. When a component is considered as "connected" to another component, the component may be directly connected to another element, or an intermediate element may exist therebetween. When a component is described as "electrically connected" to another component, the component may be directly located on another component, or an intermediate component may exist therebetween. When a component is considered as "electrically connected" to another component, the component may be connected by contact. For example, the component may be connected by a conducting wire, or may be connected in a non-contact manner, for example, may be coupled in a non-contact manner. Unless otherwise defined, meanings of all technical and scientific terms used in the specification are the same as those generally understood by a person skilled in the art of the present invention. The terms used in the specification of the present invention herein are used only to describe specific embodiments, and not intended to limit the present invention. The term "and/or" used in the specification indicates any combination or all possible combinations of one or more associated listed items, and includes such combinations.

A control assembly is mounted on a mobile platform, and can control the movement of the mobile platform. The control assembly includes a main control module, a flight control module, a power module, and the like. The mobile platform includes an aircraft, a handheld mapping apparatus, a vehicle, or the like.

In an embodiment, the control assembly includes a bearing board, a central board, a flight control board, a shock absorbing mechanism, and a communication connection cable. The flight control board is detachably mounted on the central board. The central board is connected to the bearing board via the shock absorbing mechanism. The flight control board is electrically connected to the central board via the communication connection cable. Therefore, the overall structure formed by the flight control board and the central board is provided with shock absorption by the shock absorbing mechanism.

In an embodiment, the control assembly includes a bearing board, a central board, a flight control board, a radio frequency subcard, a shock absorbing mechanism, and a communication connection cable. The radio frequency subcard is detachably mounted on the central board. The flight control board and the radio frequency subcard are both stacked on the central board. The central board is connected to the bearing board via the shock absorbing mechanism. The flight control board is electrically connected to the central board via the communication connection cable. Therefore, the overall structure formed by the flight control board and the central board is provided with shock absorption by the shock absorbing mechanism. The flight control board is detachably mounted on the central board, and stacked on the central board. While forming the overall shock absorption, it also realizes the shock isolation of the flight control board.

In an embodiment, the control assembly includes a bearing board, a central board, a flight control board, a radio frequency subcard, a shock absorbing mechanism, and a communication connection cable. The central board includes a supporting frame, which is configured to detachably mount the shock absorbing mechanism; or the central board is detachably mounted with a supporting frame, and the supporting frame is configured to detachably mount the shock absorbing mechanism; when the shock absorbing mechanism is mounted on the supporting frame, the shock absorbing mechanism and the central board can form as a whole via the supporting frame for shock absorption. The flight control board is detachably mounted on the central board, and electrically connected to the central board via the communication connection cable. Therefore, through the supporting frame and the shock absorbing mechanism, the flight control board and the central board form as a whole for shock absorption, and weight is added for shock absorption.

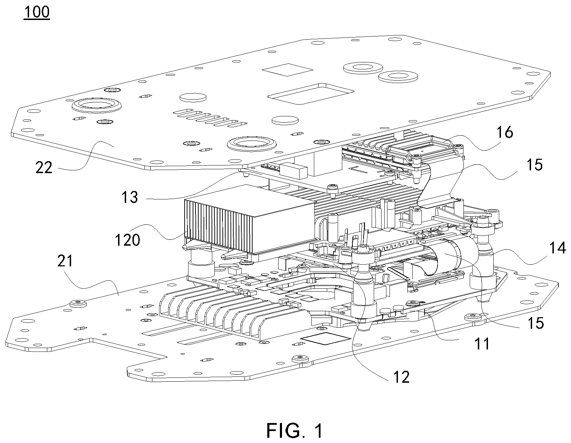

The following uses a control assembly as an example to exemplarily describe embodiments of this application. FIG. 1 is a schematic structural diagram of a control assembly according to an exemplary embodiment of this application. The control assembly is mounted in an aircraft to control the flight of the aircraft. A shock absorption effect and corresponding preservation measures are added to the control assembly. Even if the body of the aircraft receives a large impact, the safety of the control assembly can still be ensured.

As shown in FIG. 1, the control assembly 100 includes a bearing board 11, a central board 12, a flight control board 13, a shock absorbing mechanism 14, and a communication connection cable 15.

The central board 12, the flight control board 13, the shock absorbing mechanism 14 and the communication connection cable 15 may be directly or indirectly mounted on the bearing board 11. The bearing board 11 is configured to carry the central board 12, the flight control board 13, and the shock absorbing mechanism 14. The bearing board 11 may be mounted on the body of the aircraft, and configured to mount the control assembly 100 on the aircraft to control the flight of the aircraft.

The central board 12 includes a circuit board and electronic parts and components that are disposed on the circuit board and used for a signal transfer function. The central board 12 may also be referred to as a main control board, and its main function is to control the operation, etc. of other boards through signal transfer.

The flight control board 13 includes a flight controller and a posture sensor (not shown in the figure) which is configured to sense the posture of the aircraft. The flight control board 13 is stacked on the central board 12, and detachably mounted on the central board 12. The flight controller can control the flight posture of the aircraft.

That the flight control board 13 is stacked on the central board 12 includes: the flight control board 13 is directly disposed on the central board 12, or is disposed above the central board 12 and kept parallel to the central board 12.

That the flight control board 13 is detachably mounted on the central board 12 is specifically that the flight control board 13 is detachably mounted on one side of the central board 12 far away from the bearing board 11.

The shock absorbing mechanism 14 has a shock absorption function and a connection function. one end of the shock absorbing mechanism 14 is connected to the bearing board 11, and the other end thereof is connected to the central board 12. Specifically, the shock absorbing mechanism 14 may be detachably mounted on the bearing board 11 and the central board 12.

The shock absorbing mechanism 14 is mainly configured to provide shock absorption of the posture sensor, so as to ensure the safe flight of the aircraft. Certainly, the shock absorbing mechanism 14 may also provide shock absorption for the central board 12 and the flight control board 13, so as to avoid damaging the central board 12 and the flight control board 13 when the aircraft receives a large impact.

The communication connection cable 15 is configured to electrically connect the flight control board 13 to the central board 12. The communication connection cable 15 includes a flexible printed circuit (FPC) or a flexible flat cable. In this embodiment, the FPC is used to electrically connect the flight control board 13 to the central board 12 to reduce interference between flat cables.

The flexible printed circuit is used for an electrical connection, such that the interference between connection cables can be reduced, and the shock absorption effect is improved.

In an embodiment, the bearing board 11 may be a power board, which is configured to provide an operating voltage for the central board 12 or other components of the aircraft, for example, a motor of the aircraft. An FPC is also used to electrically connect the power board to the central board 12.

The flight control board 13 is fixed on the central board 12, so that the central board 12 and the flight control board 13 are fixedly connected as a whole for shock absorption. This further improves the shock absorption effect.

In the control assembly provided in the foregoing embodiment, the central board is connected to the bearing board via the shock absorbing mechanism; the flight control board is detachably mounted on the central board and stacked on the central board; the central board and the flight control board are fixedly connected as a whole for shock absorption, as well as shock isolation; in particular, the shock absorption effect of the posture sensor on the flight control board is improved, and safe flight of the aircraft is thus ensured.

In addition, mounting the flight control board on the central board relatively adds weight to the central board. Therefore, interference received by the central board from cables or the like is reduced, an impact of interference on the central board is reduced, and flight safety of the aircraft is thus improved.

In an embodiment, as shown in FIG. 1, the control assembly 100 further includes a first supporting board 21, where the first supporting board 21 is mounted on the body of the aircraft. The bearing board 11 is mounted on the first supporting board 21, and configured to mount the control assembly 100 on the aircraft via the first supporting board 21.

Specifically, the bearing board 11 is fixed on the first supporting board 21 by screws for fastening, so that in the case where the body of the aircraft is damaged, the control assembly 100 can be conveniently dismounted for reuse, for example, being mounted on another aircraft.

In another embodiment, as shown in FIG. 1, the control assembly 100 further includes a second supporting board 22, where the second supporting board 22 is disposed at an interval from the first supporting board 21, so that the bearing board 11, the central board 12 and the flight control board are all located between the first supporting board 21 and the second supporting board 22, and that the bearing board 11, the central board 12, and the flight control board 13 are thus protected.

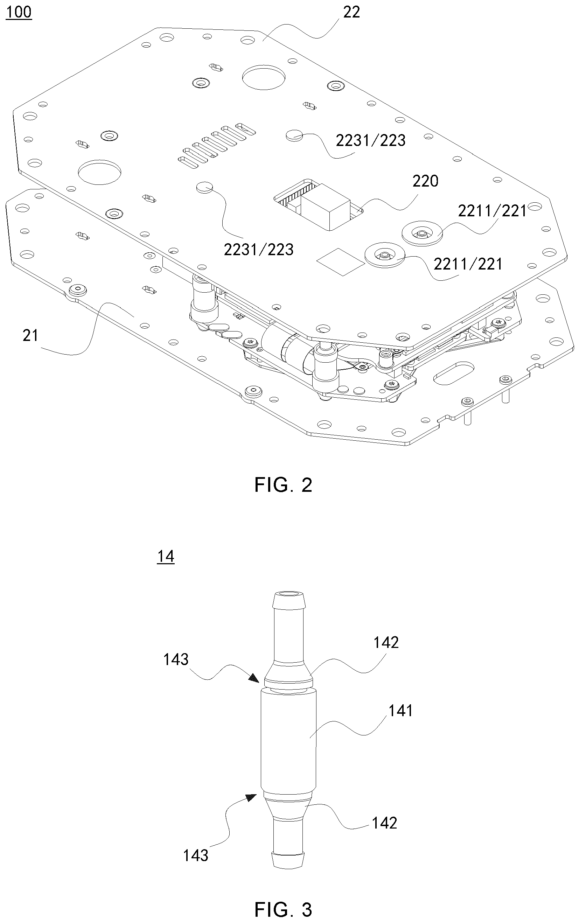

Specifically, as shown in FIG. 2, the bearing board 11, the central board 12, the flight control board 13, and the like are all located between the first supporting board 21 and the second supporting board. Therefore, not only the central board 12 and the flight control board 13 can be protected, but also the control assembly 100 can be mounted in the body of the aircraft conveniently.

Specifically, that the second supporting board 22 is disposed at an interval from the first supporting board 21 may be implemented by using at least two fixing posts of the same height. The first supporting board 21 and the second supporting board 22 are both carbon plates. The carbon plates are carbon fiber plates, which is composed of a light-weighted material, and can provide a good protection function.

In an embodiment, as shown in FIG. 3, the shock absorbing mechanism 14 may be a shock absorption ball mechanism. The shock absorbing mechanism 14 includes a main body portion 141 and two blocking portions 142. The two blocking portions 142 are respectively disposed at two ends of the main body portion 141. The shock absorbing mechanism 14 is mounted together with the bearing board 11 and the central board 12 respectively via the blocking portions 142. Mounting the shock absorbing mechanism 14 together with the bearing board 11 and the central board 12 respectively by using the blocking portions 142 includes at least three mounting manners.

Mounting manner 1: Slots 143 are formed between the main body portion 141 and the two blocking portions 142 respectively, and the shock absorbing mechanism 14 is mounted together with the bearing board 11 and the central board 12 through the engaging function of the slots 143.

Mounting manner 2: The two blocking portions 142 form an interference fit with the mounting holes on the bearing board 11 and the central board 12. The shock absorbing mechanism 14 is mounted together with the bearing board 11 and the central board 12 respectively through the interference fit.

Alternatively, the shock absorbing mechanism 14 is mounted together with the bearing board 11 and the central board 12 respectively through the engaging function of slots 143 and the interference fit.

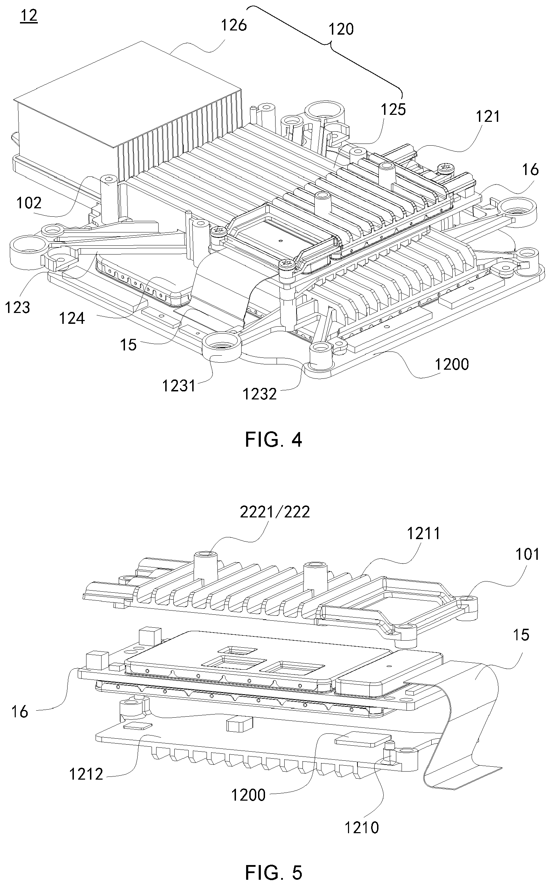

In an embodiment, as shown in FIG. 4, the central board 12 may include a supporting frame 123, and the supporting frame 123 is configured to detachably mount the shock absorbing mechanism 14; or the central board 12 is detachably mounted with a supporting frame 123, and the supporting frame 123 is configured to detachably mount the shock absorbing mechanism 14. When the shock absorbing mechanism 14 is mounted on the supporting frame 123, the shock absorbing mechanism 14 and the central board 12 form a whole via the supporting frame 123.

Specifically, as shown in FIG. 4, the supporting frame 123 includes a first mounting hole 1231 and a second mounting hole 1232, where the shock absorbing mechanism 14 is connected to the supporting frame 123 via the first mounting hole 1231, and the central board 12 is mounted on the supporting frame 123 via the second mounting hole 1232. Therefore, the shock absorbing mechanism 14 and the central board 12 can form a whole via the supporting frame 123. Because the supporting frame can add weight, the shock absorption effect of the central board is further improved.

In an embodiment, as shown in FIG. 4, the supporting frame 123 is at least partly disposed between the central board 12 and the flight control board 13, and the supporting frame 123 is detachably connected to the flight control board 13. Specifically, the supporting frame 123 includes a plurality of fixing posts 102, and the flight control board 13 is detachably mounted on the supporting frame 123 via the fixing posts 102.

Specifically, a mounting hole 101 is provided on the flight control board 13, a fixing post 102 is disposed on the supporting frame 123, and the mounting hole 101 is used in cooperation with the fixing post 102 to fix the flight control board 13; or a fixing post 102 is provided on the flight control board 13, a mounting hole 101 is provided on the supporting frame 123, and the fixing post 102 of the flight control board 13 is used in cooperation with the mounting hole 101 of the supporting frame 123 to fix the flight control board 13; or a mounting hole 101 and a fixing post 102 are provided on each of the flight control board 13 and the supporting frame 123, and the mounting holes 101 are used in cooperation with the fixing posts 102 to fix the flight control board 13 in advance.

In an embodiment, as shown in FIG. 4, the central board 12 includes a protective cover 124, where the protective cover 124 is disposed on a circuit board 1201, the circuit board 1201 is a circuit board on the central board 12, and the protective cover 124 is configured to cover the electronic parts and components of the central board 12, so as to protect the electronic parts and components and avoid interference. One side of the protective cover 124 far away from the circuit board 1201 is in contact with the supporting frame 123 to facilitate heat dissipation.

In an embodiment, as shown in FIG. 1 and FIG. 4, a heat dissipation device 120 of the central board 12 can be at least partly disposed between the protective cover 124 and the flight control board 123, and configured to dissipate heat from the central board 12 and the flight control board 13.

As shown in FIG. 4, the heat dissipation device 120 includes a first heat dissipation structure 125 and a second heat dissipation structure 126. The first heat dissipation structure 125 is disposed on the supporting frame 123, and located between the protective cover 124 and the flight control board 13. The first heat dissipation structure 125 is at least partly in contact with the protective cover 124 and the flight control board 13, and configured to dissipate heat from the central board 12 and the flight control board 13. The second heat dissipation structure 126 is disposed on the supporting frame. The first heat dissipation structure 125 and the second heat dissipation structure 126 are both heat dissipation fins.

In an embodiment, as shown in FIG. 1 and FIG. 4, the control assembly 100 further includes a radio frequency subcard 16, where the radio frequency subcard 16 is detachably mounted on the central board 12, and the radio frequency subcard 16 is electrically connected to the central board 12 via the communication connection cable 15.

The heat dissipation device 120 includes a cooling rib 121, where the cooling rib 121 is mounted on the radio frequency subcard 16; a surface area of the radio frequency subcard 16 is in thermal conductive contact with the cooling rib 121, so that heat from the radio frequency subcard 16 can be transferred by the cooling rib 121 to the heat dissipation device 120 of the central board 12 and dissipated with the help of the heat dissipation device 120.

Specifically, the cooling rib 121 is mounted on the radio frequency subcard 16, and a thermal conductive connection exists between the cooling rib 121 and at least a part of the surface area of the radio frequency subcard 16, where the thermal conductive connection may include a connection through direct-contact or a connection through indirect-contact.

In an embodiment, as shown in FIG. 5, the cooling rib 121 includes a first cooling rib 1211 and a second cooling rib 1212. Two sides of the radio frequency subcard 16 may respectively attach to the first cooling rib 1211 and the second cooling rib 1212. Further, the first cooling rib 1211 and the second cooling rib 1212 dissipate heat from the radio frequency subcard 16.

Specifically, the first cooling rib 1211 and the second cooling rib 1212 are mounted on two sides of a radio frequency circuit board of the radio frequency subcard 16 via mounting holes 101. The first cooling rib 1211 and the second cooling rib 1212 are both heat dissipation fins.

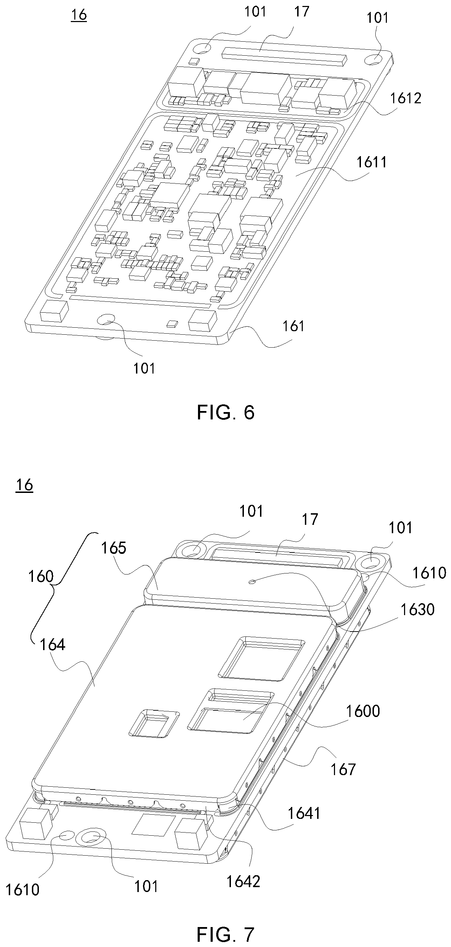

As shown in FIG. 6, the radio frequency subcard 16 includes a radio frequency circuit board 161, and radio frequency parts and a fixing structure that are disposed on the radio frequency circuit board 161. The radio frequency subcard 16 is configured to process a radio frequency signal. The fixing structure is disposed on the radio frequency circuit board 161, and configured to detachably mount the radio frequency circuit board on the main board. The fixing structure includes at least one of the following: a mounting hole, a fastener, and a slot.

For example, in FIG. 6, the fixing structure is specifically the mounting hole 101, and the radio frequency subcard 16 is detachably mounted on the central board 12 via a screw through the mounting hole 101, so that the radio frequency subcard 16 is stacked over the central board 12 to reduce the space occupied.

In this embodiment, there are three mounting holes 101, where two mounting holes 101 are disposed at one end of the radio frequency circuit board 161, and another mounting hole 101 is disposed at another end of the radio frequency circuit board 161. Certainly, another quantity of mounting holes may be disposed.

Specifically, as shown in FIG. 6, the radio frequency subcard 16 further includes a connecting member 17, where the connecting member 17 is a connector electrically connected to the communication connection cable 15. The connecting member 17 is disposed between two mounting holes 101, so that a protective member is mounted to protect the communication connection cable 15.

In an embodiment, as shown in FIG. 6, the radio frequency circuit board 161 includes a first disposition area 1611 and a second disposition area 1612. The first disposition area 1611 is configured to dispose some electronic parts and components of the radio frequency subcard 16, for example, electronic parts and components related to implementing a radio frequency function. The second disposition area 1612 is arranged at an interval from the first disposition area 1611, and the interval is specifically an interval of a preset distance, so as to avoid mutual interference and further improve signal quality. The second disposition area 1612 is configured to dispose some electronic parts and components of the radio frequency subcard 16, where the electronic parts and components are related electronic parts and components for implementing a clock function.

In an embodiment, the heat generated by the electronic parts and components in the first disposition area 1611 is more than that generated by the electronic parts and components in the second disposition area 1612. A surface area of the first disposition area 1611 of the radio frequency subcard 16 can at least partly attach to at least a part of the area of the cooling rib, and preferentially dissipate the heat from the electronic parts and components that generate more heat.

In an embodiment, as shown in FIG. 7, positioning holes 1610 are provided on the radio frequency circuit board 161 of the radio frequency subcard 16, positioning posts 1210 are provided on the first cooling rib 1211 and the second cooling rib 1212, and the positioning holes 1610 on the radio frequency circuit board 161 are used in cooperation with the positioning posts 1210 to fix the radio frequency circuit board 161 in advance; or positioning posts 1210 may be disposed on the radio frequency circuit board 161, the positioning holes 1610 may be disposed on the first cooling rib 1211 and the second cooling rib 1212, and the positioning posts 1210 are used in cooperation with the positioning holes 1610 to fix the radio frequency circuit board 161 in advance; or a positioning hole 1610 and a positioning post 1210 may be disposed on each of the radio frequency circuit board 161, the first cooling rib 1211, and the second cooling rib 1212; the positioning holes are used in cooperation with the positioning posts to fix the radio frequency circuit board 161 in advance.

As shown in FIG. 7, the radio frequency subcard 16 further includes a shielding cover 160, where the shielding cover 160 is disposed on the radio frequency circuit board 161, and configured to shield the electronic parts and components of the radio frequency subcard 16 to avoid signal interference.

In an embodiment, as shown in FIG. 7, the shielding cover 160 includes a first shielding cover 164 and a second shielding cover 165, where the first shielding cover 164 is disposed in the first disposition area 1611, and configured to shield the electronic parts and components in the first disposition area 1611; the second shielding cover 165 is disposed in the second disposition area 1612, and configured to shield the electronic parts and components in the second disposition area 1612. Therefore, there is no mutual interference between the electronic parts and components of the radio frequency subcard 16.

The shielding cover 160 may further include any other shielding cover, for example, a third shielding cover 166, disposed on the other side of the radio frequency circuit board 161. Certainly, the other side of the radio frequency circuit board 161 may adopt a structure same as that of the side including the first shielding cover 164 and the second shielding cover 165, that is, structures of the two sides of the radio frequency subcard 16 are the same, although the electronic parts and components disposed thereon are different.

Specifically, the first shielding cover 164 may at least partly fit into at least some areas on a surface of the first cooling rib 1211 in the cooling rib 121, so as to implement heat dissipation for the electronic parts and components welded in the first disposition area 1611.

In an embodiment, as shown in FIG. 4, the first shielding cover 164 includes a fixing base 1641 and a housing cover 1642. The fixing base 1641 is disposed on a circuit board corresponding to the first disposition area 1611, and is specifically welded on the circuit board. The housing cover 1642 is mounted on the fixing base 1641 to cover the electronic parts and components in the first disposition area 1611. In this way, the shielding cover can be mounted conveniently, and immunity to interference can be achieved.

Specifically, the housing cover 1642 is mounted on the fixing base 1641 via a fastener, so as to facilitate its dismounting for maintenance. Certainly, other manners may also be used.

In an embodiment, at least one cooling rib slot 1600 is disposed on the first shielding cover 164, where the cooling rib slot is a punched slot, and a position in which the cooling rib slot is disposed on the first shielding cover 164 corresponds to a heating element on the radio frequency circuit board 161, so that a bottom of the cooling rib slot 1600 is closer to the heating element and that thermal conductivity is better.

The space between an inner side of the first shielding cover 164 and the heating element on the radio frequency circuit board 161 is filled with a thermally conductive adhesive. Because the thermally conductive adhesive between the bottom of the cooling rib slot 1600 and the heating element is relatively thin, the thermal conductivity is even better.

In an embodiment, a protruding block 1200 may be disposed on the cooling rib 121. As shown in FIG. 5, the protruding block 1200 is disposed on one side of the second cooling rib 1212 facing the radio frequency subcard 16. When the cooling rib 121 is mounted on the radio frequency subcard 16, the protruding block 1200 abuts the bottom of the cooling rib slot 1600 to accelerate heat dissipation.

In an embodiment, the second shielding cover 165 is a cover body, and the cover body is welded on a circuit board corresponding to the second disposition area 1612. When the cover body is welded on the circuit board, sealing of multiple second disposition areas 1612 can be achieved, so that the electronic parts and components in the second shielding cover 165 can be completely prevented from interfering with the electronic parts and components in the first shielding cover 164.

A vent hole 1630 is provided on the shielding cover 160, and the vent hole 1630 is configured to equalize the internal air pressure and external air pressure of the shielding cover. For example, as shown in FIG. 5, the vent hole 1630 is disposed on the second shielding cover 165. When the radio frequency subcard 16 works, the heat generated by the second shielding cover 165 causes higher pressure within the cover body, and the vent hole 1630 is configured to equalize the internal air pressure and external air pressure.

The radio frequency subcard 16 is detachably mounted on the central board 12, for example, mounted by a mounting hole, so that radio frequency subcards 16 having different frequency bands can be replaced conveniently; further, with respect to the same electronic product, electronic products having different frequency bands can be customized without changing a hardware layout.

The radio frequency subcard 16 includes a two-frequency radio frequency subcard or a three-frequency radio frequency subcard. The receiving and transmitting frequencies of the two-frequency radio frequency subcard may include 2.4 GHz and 5.8 GHz. The receiving and transmitting frequencies of the three-frequency radio frequency subcard include 840 MHz, 1.4 GHz, and 2.4 GHz.

Specifically, that the communication connection cable 15 is electrically connected to the central board 12 and the radio frequency subcard 16 may include: at least one end of the communication connection cable 15 is provided with a connector for its detachably connection with the central board 12 or the radio frequency subcard 16; or connectors may be provided for the central board 12 and the radio frequency subcard 16, and the communication connection cable 15 is connected to these connectors to implement communication of the central board 12 and the radio frequency subcard 16; or a connector is disposed on one of the central board 12 and the radio frequency subcard 16, another connector is disposed at one end of the communication connection cable 15, such that the communication of the central board 12 and the radio frequency subcard 16 is implemented.

In an embodiment, as shown in FIG. 2, the control assembly 100 further includes a first limiting structure 221. As shown in FIG. 5, the control assembly 100 may further include a second limiting structure 222. The first limiting structure 221 is disposed on the second supporting board 22. The second limiting structure 222 is disposed on the heat dissipation device 120 of the central board 12, and specifically, the second limiting structure 222 is disposed on the first cooling rib 1211. The first limiting structure 221 is used in cooperation with the second limiting structure 222.

When an aircraft is impacted, the first limiting structure 221 on the central board 12 cooperates with the second limiting structure 222 on the second supporting board 22, to ensure that the central board 12 is not impacted due to an excessive displacement, such that the central board is further protected.

Specifically, the first limiting structure 221 includes a limiting hole 2211, where the limiting hole 2211 is provided on the second supporting board 22; the second limiting structure 222 includes a limiting post 2221, where the limiting post 2221 is disposed on the first cooling rib 1211 of the heat dissipation device 120. When the aircraft is impacted, the limiting post 2221 abuts against the limiting hole 2211 to implement the limiting function.

In an embodiment, to play a buffer function during limiting, the first limiting structure 221 further includes a buffer member, where the buffer member is disposed in the limiting hole 2211. Specifically, the buffer member may be a rubber ring.

In an embodiment, as shown in FIG. 2, the control assembly 100 further includes a third limiting structure 223, where the third limiting structure 223 is disposed on the second supporting board 22. The third limiting structure 223 is used in cooperation with the heat dissipation device 120 of the central board 12 to implement the limiting function when the aircraft is impacted. The third limiting structure 223 mainly functions for torsional limiting.

Specifically, as shown in FIG. 2, the third limiting structure 223 includes at least two engaging members 2231, where the two engaging members 2231 are spaced on the second supporting board 22. When the aircraft is impacted, the at least two engaging members 2231 are engaged on the heat dissipation device to achieve the limiting function. As shown in FIG. 4, specifically, the at least two engaging members 2231 are engaged on two sides of the second heat dissipation structure 126 to avoid a large torsional displacement of the central board.

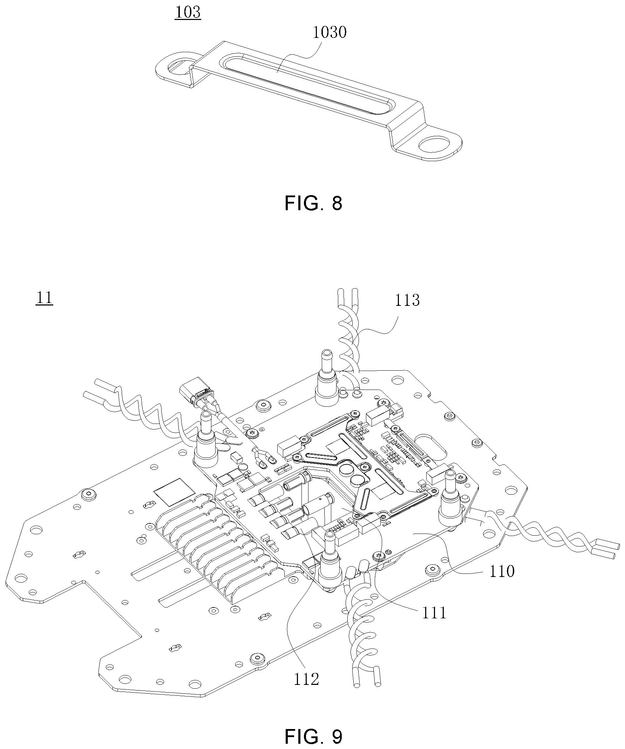

In an embodiment, the control assembly 100 further includes a plurality of protective members 103. Specifically, as shown in FIG. 8, the plurality of protective members 103 are mounted on the radio frequency subcard 16, the central board 12, and the bearing board 11, and configured to protect the connector of the flexible circuit board.

Specifically, a through hole 1030 is provided on the protective member 103, and the shape of the through hole 1030 matches that of the connecting member 17, so as to protect the flexible circuit board and the connecting member. For example, the protective member 103 may be a pressing member.

In an embodiment, as shown in FIG. 9, the bearing board 11 may be a power board, where the power board is configured to provide an operating voltage for the aircraft, and the power board includes a power circuit board and a power unit that is disposed on the power circuit board and configured to provide the operating voltage. The power circuit board 110 includes an opening portion 111, and an electrode terminal 112, where the electrode terminal 112 is disposed on a sidewall of the opening portion 111, a contact portion of the electrode terminal 112 is located in the opening portion 111, and the electrode terminal 112 is connected to a power cable 113.

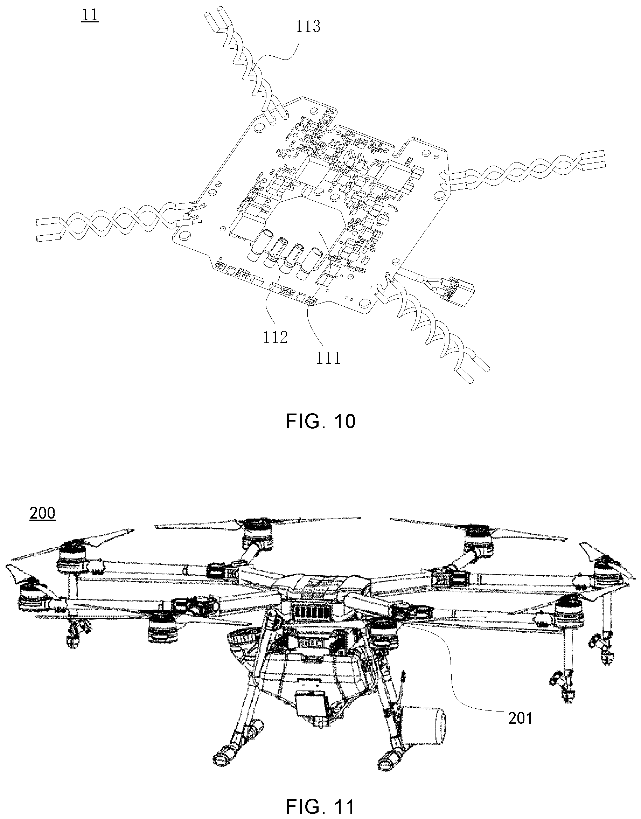

To reduce interference, as shown in FIG. 10, the power cable 113 is led out of the power board by way of circuit board routing. The routing of the power cable 113 on the power circuit board 110is away from the electronic components of the power board, so as to avoid electromagnetic interference.

Specifically, the power cable 113 may include a plurality of twisted-pair cables, and the plurality of twisted pair cables are led out from various corners of the power circuit board 110. As shown in FIG. 10, the power cable 113 may include four twisted-pair cables, which are respectively led out from four corners of the power circuit board 110.

Please refer to FIG. 11, which is a schematic structural diagram of an aircraft according to an exemplary embodiment of this application. The aircraft includes an unmanned aerial vehicle. The unmanned aerial vehicle may be a rotor unmanned aerial vehicle, for example, a four-rotor unmanned aerial vehicle, a six-rotor unmanned aerial vehicle, or an eight-rotor unmanned aerial vehicle, or may be a fixed wing unmanned aerial vehicle.

As shown in FIG. 11, the aircraft 200 includes a body 201 and a control assembly detachably mounted in the body 201, where the control assembly may be any control assembly 100 provided in the foregoing embodiments. The control assembly 100 has a good shock absorption effect. Therefore, the safety of the aircraft 200 can be improved. In addition, the bearing board 11, the central board 12, the flight control board 13, and the radio frequency subcard 16 of the control assembly 100 are all detachable, that is, a modular design is employed. Therefore, even if the aircraft crashes, the control assembly may be taken out and mounted again in the body of a new aircraft to be used again. Therefore, the modular utilization is improved.

The foregoing descriptions are merely specific implementations of the exemplary embodiments of this application, but the scope of protection of the exemplary embodiments of this application is not limited thereto. A person skilled in the art may readily figure out various equivalent modifications or replacements within the technical scope disclosed in the exemplary embodiments of this application, and all such modifications or replacements shall fall within the scope of protection of the exemplary embodiments of this application. Therefore, the scope of protection of the exemplary embodiments of this application shall be subject to the scope of protection of the claims.

## Claims

1. A control assembly mounted in an aircraft to control flight of the aircraft, **characterized in that** the control assembly comprises:
a bearing board;
a central board, including a circuit board and electronic parts and components that are disposed on the circuit board for a signal transfer function;
a flight control board, including a flight controller and a posture sensor that is configured to sense a posture of the aircraft, wherein the flight control board is stacked over the central board, and the flight controller controls a flight posture of the aircraft;
a shock absorbing mechanism, one end of which is connected to the bearing board and another end of which is connected to the central board, configured to provide shock absorption for the posture sensor; and
a communication connection cable, configured to electrically connect the flight control board to the central board,
wherein the central board and the flight control board are fixedly connected as a whole for shock absorption.

2. The control assembly according to claim 1, **characterized in that** the shock absorbing mechanism includes:
a main body portion; and
two blocking portions respectively disposed at two ends of the main body portion, wherein the shock absorbing mechanism is mounted to the bearing board and the central board respectively via the blocking portions.

3. The control assembly according to claim 2, **characterized in that** slots are formed between the main body portion and the two blocking portions respectively, and configured to mount the shock absorbing mechanism together with the bearing board and the central board; and/or
the two blocking portions respectively form an interference fit with the bearing board and the central board, so that the shock absorbing mechanism is mounted together with the bearing board and the central board respectively.

4. The control assembly according to claim 2, **characterized in that** the shock absorbing mechanism is detachably mounted on the bearing board and the central board.

5. The control assembly according to any one of claims 1 to 4, **characterized by** further comprising:
a first supporting board, mounted on a body of the aircraft, wherein the bearing board is mounted on the first supporting board.

6. The control assembly according to claim 5, **characterized by** further comprising: a second supporting board, disposed at an interval from the first supporting board, so that the bearing board, the central board, and the flight control board are all located between the first supporting board and the second supporting board.

7. The control assembly according to claim 6, **characterized by** further comprising:
a first limiting structure, disposed on the second supporting board; and
a second limiting structure, disposed on a heat dissipation device of the central board, wherein the first limiting structure cooperates with the second limiting structure.

8. The control assembly according to claim 7, **characterized in that** the first limiting structure includes:
a limiting hole disposed on the second supporting board; and the second limiting structure includes:
a limiting post, disposed on the heat dissipation device, wherein when the aircraft is impacted, the limiting post abuts against the limiting hole to implement limiting.

9. The control assembly according to claim 8, **characterized in that** the first limiting structure further includes:
a buffer member, disposed in the limiting hole.

10. The control assembly according to claim 7, **characterized by** further comprising: a third limiting structure, disposed on the second supporting board to cooperate with the heat dissipation device of the central board to implement limiting when the aircraft is impacted.

11. The control assembly according to claim 10, **characterized in that** the third limiting structure includes:
at least two engaging members spaced on the second supporting board, wherein
when the aircraft is impacted, the at least two engaging members are engaged on the heat dissipation device to implement limiting.

12. The control assembly according to any one of claims 1 to 11, **characterized by** further comprising:
a radio frequency subcard, including a radio frequency circuit board and radio frequency parts disposed on the radio frequency circuit board, wherein the radio frequency subcard is configured to process a radio frequency signal, detachably mounted on the central board, and electrically connected to the central board via the communication connection cable.

13. The control assembly according to claim 12, **characterized in that** the heat dissipation device includes:
a cooling rib, mounted on the radio frequency subcard, wherein a surface area of the radio frequency subcard is in thermal conductive contact with the cooling rib, so that heat from the radio frequency subcard is transferred by the cooling rib to the heat dissipation device on the central board and dissipated by the heat dissipation device.

14. The control assembly according to claim 13, **characterized in that** the cooling rib includes a first cooling rib and a second cooling rib, and two sides of the radio frequency subcard respectively attach to the first cooling rib and the second cooling rib.

15. The control assembly according to claim 14, **characterized in that** the first cooling rib and the second cooling rib are both heat dissipation fins.

16. The control assembly according to claim 14, **characterized in that** positioning holes are disposed on the radio frequency circuit board, positioning posts are disposed on the first cooling rib and the second cooling rib, and the positioning holes cooperate with the positioning posts to fix the radio frequency circuit board in advance; or
positioning posts are disposed on the radio frequency circuit board, positioning holes are disposed on the first cooling rib and the second cooling rib, and the positioning posts cooperate with the positioning holes to fix the radio frequency circuit board in advance; or
a positioning hole and a positioning post are disposed on each of the radio frequency circuit board, the first cooling rib, and the second cooling rib, and the positioning holes cooperate with the positioning posts to fix the radio frequency circuit board in advance.

17. The control assembly according to any one of claims 12 to 16, **characterized in that** the radio frequency subcard is a two-frequency radio frequency subcard or a three-frequency radio frequency subcard.

18. The control assembly according to any one of claims 12 to 17, **characterized in that** the radio frequency subcard further includes:
a fixing structure, disposed on the radio frequency circuit board, and configured to detachably mount the radio frequency circuit board on the main board.

19. The control assembly according to claim 18, **characterized in that** the fixing structure includes at least one of the following: a mounting hole, a fastener, and a slot.

20. The control assembly according to any one of claims 13 to 19, **characterized in that** the radio frequency circuit board includes:
a first disposition area, configured to dispose a part of the electronic parts and components of the radio frequency subcard; and
a second disposition area, spaced from the first disposition area, and configured to dispose a part of the electronic parts and components of the radio frequency subcard.

21. The control assembly according to claim 20, **characterized in that** heat generated by the electronic parts and components in the first disposition area is more than heat generated by the electronic parts and components in the second disposition area.

22. The control assembly according to claim 20, **characterized in that** the electronic parts and components in the first disposition area are parts and components for implementing a radio frequency function, and/or the electronic parts and components in the second disposition area are parts and components for implementing a clock function.

23. The control assembly according to claim 21 or 22, **characterized in that** the radio frequency subcard further includes:
a shielding cover, disposed on the radio frequency circuit board, and configured to shield the electronic parts and components of the radio frequency subcard.

24. The control assembly according to claim 23, **characterized in that** the shielding cover includes:
a first shielding cover, disposed in the first disposition area, and configured to shield the electronic parts and components in the first disposition area; and
a second shielding cover, disposed in the second disposition area, and configured to shield the electronic parts and components in the second disposition area.

25. The control assembly according to claim 24, **characterized in that** the first shielding cover at least partly attaches to at least a portion of a surface of the cooling rib.

26. The control assembly according to claim 24 or 25, **characterized in that** the first shielding cover includes:
a fixing base, disposed on a circuit board corresponding to the first disposition area; and
a housing cover, mounted on the fixing base to cover the electronic parts and components in the first disposition area.

27. The control assembly according to claim 26, **characterized in that** the fixing base is welded on a circuit board corresponding to the first disposition area.

28. The control assembly according to claim 26, **characterized in that** the housing cover is mounted on the fixing base via a fastener.

29. The control assembly according to claim 26, **characterized in that** the second shielding cover is a cover body, and the cover body is welded on a circuit board corresponding to the second disposition area.

30. The control assembly according to claim 29, **characterized in that** a vent hole is disposed on the shielding cover, and the vent hole is configured to equalize an internal air pressure and an external air pressure of the cover body.

31. The control assembly according to claim 1, **characterized in that** the central board includes a supporting frame, and the supporting frame is configured to detachably mount the shock absorbing mechanism; or
the central board is detachably mounted with a supporting frame, and the supporting frame is configured to detachably mount the shock absorbing mechanism; and
when the shock absorbing mechanism is mounted on the supporting frame, the shock absorbing mechanism and the central board form a whole through the supporting frame.

32. The control assembly according to claim 31, **characterized in that** the supporting frame is at least partly disposed between the central board and the flight control board, and detachably connected to the flight control board.

33. The control assembly according to claim 32, **characterized in that** a mounting hole is disposed on the flight control board, a fixing post is disposed on the supporting frame, and the mounting hole cooperates with the fixing post to fix the flight control board; or
a fixing post is disposed on the flight control board, a mounting hole is disposed on the supporting frame, and the fixing post cooperates with the mounting hole to fix the flight control board; or
a mounting hole and a fixing post are disposed on each of the flight control board and the supporting frame, and the mounting holes cooperate with the fixing posts to fix the flight control board in advance.

34. The circuit board component according to claim 33, **characterized in that** the central board further includes:
a protective cover, disposed on the circuit board to cover the electronic parts and components of the central board, wherein one side of the protective cover far away from the circuit board is in contact with the supporting frame.

35. The control assembly according to claim 34, **characterized in that** the heat dissipation device is at least partly disposed between the protective cover and the flight control board to dissipate heat from the central board and the flight control board.

36. The control assembly according to claim 35, **characterized in that** the heat dissipation device includes a first heat dissipation structure and a second heat dissipation structure.

37. The control assembly according to claim 36, **characterized in that** the first heat dissipation structure is disposed between the protective cover and the flight control board, and the second heat dissipation structure is disposed on the supporting frame.

38. The control assembly according to claim 36 or 37, **characterized in that** the first heat dissipation structure and the second heat dissipation structure are both heat dissipation fins.

39. The control assembly according to claim 1, **characterized in that** the communication connection cable is further configured to electrically connect the central board to the bearing board.

40. The control assembly according to any one of claims 1 to 39, **characterized in that** the communication connection cable includes a flexible circuit board or a flexible flat cable.

41. The control assembly according to claim 40, **characterized by** further comprising: a plurality of protective members, mounted on the radio frequency subcard, the central board, and the bearing board to protect a connector of the flexible circuit board.

42. The control assembly according to claim 41, **characterized in that** a through hole is disposed on the protective member, and a shape of the through hole matches a shape of the connecting member, and/or the protective member is a pressing member.

43. The control assembly according to any one of claims 1 to 42, **characterized in that** the bearing board is a power board, and the power board includes a power circuit board and a power unit that is disposed on the power circuit board and configured to provide an operating voltage; and the power circuit board includes:
an opening portion; and
an electrode terminal, disposed on a sidewall of the opening portion, wherein a contact portion of the electrode terminal is located in the opening portion, and the electrode terminal is connected to a power cable.

44. The control assembly according to claim 43, **characterized in that** the power cable is led out of the power board by way of circuit board routing .

45. The control assembly according to claim 44, **characterized in that** the circuit board routing of the power cable is away from electronic components of the power board.

46. The control assembly according to claim 43, **characterized in that** the power cable includes a plurality of twisted-pair cables, and the plurality of twisted-pair cables are led out from various corners of the power circuit board.

47. The control assembly according to claim 1, **characterized in that** the flight control board is detachably mounted on one side of the central board far away from the bearing board.

48. An aircraft, **characterized by** comprising:
a body; and
a control assembly, detachably mounted in the body, the control assembly includes:
a bearing board;
a central board, including a circuit board and electronic parts and components that are disposed on the circuit board for a signal transfer function;
a flight control board, including a flight controller and a posture sensor that is configured to sense a posture of the aircraft, wherein the flight control board is stacked over the central board, and the flight controller can control a flight posture of the aircraft;
a shock absorbing mechanism, one end of which is connected to the bearing board and another end of which is connected to the central board, configured to provide shock absorption for the posture sensor; and
a communication connection cable, configured to electrically connect the flight control board to the central board,
wherein the central board and the flight control board are fixedly connected as a whole for shock absorption.

49. The aircraft according to claim 48, **characterized in that** the shock absorbing mechanism includes:
a main body portion; and
two blocking portions respectively disposed at two ends of the main body portion, wherein the shock absorbing mechanism is mounted to the bearing board and the central board respectively via the blocking portions.

50. The aircraft according to claim 49, **characterized in that** slots are formed between the main body portion and the two blocking portions respectively, and configured to mount the shock absorbing mechanism together with the bearing board and the central board; and/or
the two blocking portions respectively form an interference fit with the bearing board and the central board, so that the shock absorbing mechanism is mounted together with the bearing board and the central board respectively.

51. The aircraft according to claim 49, **characterized in that** the shock absorbing mechanism is detachably mounted on the bearing board and the central board.

52. The aircraft according to any one of claims 48 to 51, **characterized by** further comprising:
a first supporting board, mounted on the body of the aircraft, wherein the bearing board is mounted on the first supporting board.

53. The aircraft according to claim 52, **characterized by** further comprising:
a second supporting board, disposed at an interval from the first supporting board, so that the bearing board, the central board, and the flight control board are all located between the first supporting board and the second supporting board.

54. The aircraft according to claim 53, **characterized by** further comprising:
a first limiting structure, disposed on the second supporting board; and
a second limiting structure, disposed on a heat dissipation device of the central board, wherein the first limiting structure cooperates with the second limiting structure.

55. The aircraft according to claim 54, **characterized in that**
the first limiting structure includes:
a limiting hole, disposed on the second supporting board; and the second limiting structure includes:
a limiting post, disposed on the heat dissipation device, wherein when the aircraft is impacted, the limiting post abuts against the limiting hole to implement limiting.

56. The aircraft according to claim 55, **characterized in that** the first limiting structure further includes:
a buffer member, disposed in the limiting hole.

57. The aircraft according to claim 54, **characterized by** further comprising:
a third limiting structure, disposed on the second supporting board to cooperate with the heat dissipation device of the central board to implement limiting when the aircraft is impacted.

58. The aircraft according to claim 57, **characterized in that** the third limiting structure includes:
at least two engaging members spaced on the second supporting board, wherein
when the aircraft is impacted, the at least two engaging members are engaged on the heat dissipation device to implement limiting.

59. The aircraft according to any one of claims 48 to 58, **characterized by** further comprising: a radio frequency subcard, including a radio frequency circuit board and radio frequency parts disposed on the radio frequency circuit board, wherein the radio frequency subcard is configured to process a radio frequency signal, detachably mounted on the central board, and electrically connected to the central board via the communication connection cable.

60. The aircraft according to claim 59, **characterized in that** the heat dissipation device includes:
a cooling rib, mounted on the radio frequency subcard, wherein a surface area of the radio frequency subcard is in thermal conductive contact with the cooling rib, so that heat from the radio frequency subcard is transferred by the cooling rib to the heat dissipation device on the central board and dissipated by theheat dissipation device.

61. The aircraft according to claim 60, **characterized in that** the cooling rib includes a first cooling rib and a second cooling rib, and two sides of the radio frequency subcard respectively attach to the first cooling rib and the second cooling rib.

62. The aircraft according to claim 61, **characterized in that** the first cooling rib and the second cooling rib are both heat dissipation fins.

63. The aircraft according to claim 61, **characterized in that** positioning holes are disposed on the radio frequency circuit board, positioning posts are disposed on the first cooling rib and the second cooling rib, and the positioning holes cooperate with the positioning posts to fix the radio frequency circuit board in advance; or
positioning posts are disposed on the radio frequency circuit board, positioning holes are disposed on the first cooling rib and the second cooling rib, and the positioning posts cooperate with the positioning holes to fix the radio frequency circuit board in advance; or
a positioning hole and a positioning post are disposed on each of the radio frequency circuit board, the first cooling rib, and the second cooling rib, and the positioning holes are cooperate with the positioning posts to fix the radio frequency circuit board in advance.

64. The aircraft according to any one of claims 59 to 63, **characterized in that** the radio frequency subcard is a two-frequency radio frequency subcard or a three-frequency radio frequency subcard.

65. The aircraft according to any one of claims 59 to 64, **characterized in that** the radio frequency subcard further includes:
a fixing structure, disposed on the radio frequency circuit board, and configured to detachably mount the radio frequency circuit board on the main board.

66. The aircraft according to claim 65, **characterized in that** the fixing structure includes at least one of the following: a mounting hole, a fastener, and a slot.

67. The aircraft according to any one of claims 60 to 66, **characterized in that** the radio frequency circuit board includes:
a first disposition area, configured to dispose a part of the electronic parts and components of the radio frequency subcard; and
a second disposition area, spaced from the first disposition area, and configured to dispose a part of the electronic parts and components of the radio frequency subcard.

68. The aircraft according to claim 67, **characterized in that** heat generated by the electronic parts and components in the first disposition area is more than heat generated by the electronic parts and components in the second disposition area.

69. The aircraft according to claim 67, **characterized in that** the electronic parts and components in the first disposition area are parts and components for implementing a radio frequency function, and/or the electronic parts and components in the second disposition area are parts and components for implementing a clock function.

70. The aircraft according to claim 68 or 69, **characterized in that** the radio frequency subcard further includes:
a shielding cover, disposed on the radio frequency circuit board, and configured to shield the electronic parts and components of the radio frequency subcard.

71. The aircraft according to claim 70, **characterized in that** the shielding cover includes:
a first shielding cover, disposed in the first disposition area, and configured to shield the electronic parts and components in the first disposition area; and
a second shielding cover, disposed in the second disposition area, and configured to shield the electronic parts and components in the second disposition area.

72. The aircraft according to claim 71, **characterized in that** the first shielding cover at least partly attaches to at least a portion of a surface of the cooling rib.

73. The aircraft according to claim 71 or 72, **characterized in that** the first shielding cover includes:
a fixing base, disposed on a circuit board corresponding to the first disposition area; and
a housing cover, mounted on the fixing base to cover the electronic parts and components in the first disposition area.

74. The aircraft according to claim 73, **characterized in that** the fixing base is welded on a circuit board corresponding to the first disposition area.

75. The aircraft according to claim 73, **characterized in that** the housing cover is mounted on the fixing base via a fastener.

76. The aircraft according to claim 73, **characterized in that** the second shielding cover is a cover body, and the cover body is welded on a circuit board corresponding to the second disposition area.

77. The aircraft according to claim 76, **characterized in that** a vent hole is disposed on the shielding cover, and the vent hole is configured to equalize an internal air pressure and an external air pressure of the cover body.

78. The aircraft according to claim 48, **characterized in that** the central board includes a supporting frame, and the supporting frame is configured to detachably mount the shock absorbing mechanism; or
the central board is detachably mounted with a supporting frame, and the supporting frame is configured to detachably mount the shock absorbing mechanism; and
when the shock absorbing mechanism is mounted on the supporting frame, the shock absorbing mechanism and the central board form a whole through the supporting frame.

79. The aircraft according to claim 78, **characterized in that** the supporting frame is at least partly disposed between the central board and the flight control board, and detachably connected to the flight control board.

80. The aircraft according to claim 79, **characterized in that** a mounting hole is disposed on the flight control board, a fixing post is disposed on the supporting frame, and the mounting hole cooperates with the fixing post to fix the flight control board; or
a fixing post is disposed on the flight control board, a mounting hole is disposed on the supporting frame, and the fixing post cooperates with the mounting hole to fix the flight control board; or
a mounting hole and a fixing post are disposed on each of the flight control board and the supporting frame, and the mounting holes cooperate with the fixing posts to fix the flight control board in advance.

81. The circuit board component according to claim 80, **characterized in that** the central board further includes:
a protective cover, disposed on the circuit board to cover the electronic parts and components of the central board, wherein one side of the protective cover far away from the circuit board is in contact with the supporting frame.

82. The aircraft according to claim 81, **characterized in that** the heat dissipation device is at least partly disposed between the protective cover and the flight control board to dissipate heat from the central board and the flight control board.

83. The aircraft according to claim 82, **characterized in that** the heat dissipation device includes a first heat dissipation structure and a second heat dissipation structure.

84. The aircraft according to claim 83, **characterized in that** the first heat dissipation structure is disposed between the protective cover and the flight control board, and the second heat dissipation structure is disposed on the supporting frame.

85. The aircraft according to claim 83 or 84, **characterized in that** the first heat dissipation structure and the second heat dissipation structure are both heat dissipation fins.

86. The aircraft according to claim 48, **characterized in that** the communication connection cable is further configured to electrically connect the central board to the bearing board.

87. The aircraft according to any one of claims 48 to 86, **characterized in that** the communication connection cable includes a flexible circuit board or a flexible flat cable.

88. The aircraft according to claim 87, **characterized by** further comprising:
a plurality of protective members, mounted on the radio frequency subcard, the central board, and the bearing board, and configured to protect a connector of the flexible circuit board.

89. The aircraft according to claim 88, **characterized in that** a through hole is disposed on the protective member, and a shape of the through hole matches a shape of the connecting member, and/or the protective member is a pressing member.

90. The aircraft according to any one of claims 48 to 89, **characterized in that** the bearing board is a power board, and the power board includes a power circuit board and a power unit that is disposed on the power circuit board and configured to provide an operating voltage; and the power circuit board includes:
an opening portion; and
an electrode terminal, disposed on a sidewall of the opening portion, wherein a contact portion of the electrode terminal is located in the opening portion, and the electrode terminal is connected to a power cable.

91. The aircraft according to claim 90, **characterized in that** the power cable is led out of the power board by way of circuit board routing.

92. The aircraft according to claim 91, **characterized in that** the circuit board routing of the power cable is away from electronic components of the power board.

93. The aircraft according to claim 90, **characterized in that** the power cable includes a plurality of twisted-pair cables, and the plurality of twisted-pair cables are led out from various corners of the power circuit board.

94. The aircraft according to claim 48, **characterized in that** the flight control board is detachably mounted on one side of the central board far away from the bearing board.
